(19) Europäisches Patentamt
European Patent Office
Office européen des brevets

(11) **EP 4 645 112 A1**

(12) **EUROPEAN PATENT APPLICATION**

(43) Date of publication:
**05.11.2025 Bulletin 2025/45**

(21) Application number: **25172303.7**

(22) Date of filing: **24.04.2025**

(51) International Patent Classification (IPC):
**G06F 16/438** (2019.01)

(52) Cooperative Patent Classification (CPC):
**G06F 16/4387**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **02.05.2024 US 202463641750 P
31.07.2024 US 202418791022**

(71) Applicant: **Spotify AB
111 53 Stockholm (SE)**

(72) Inventors:
• **TOMASI, Federico**
  **111 53 Stockholm (SE)**
• **DAI, Zhenwen**
  **111 53 Stockholm (SE)**
• **FABBRI, Francesco**
  **111 53 Stockholm (SE)**

(74) Representative: **Ström & Gulliksson AB
Box 5275
102 46 Stockholm (SE)**

(54) **SYSTEMS AND METHODS FOR SELECTING A SET OF MEDIA ITEMS**

(57) An example method includes receiving a request to identify a set of media items for playback to a user. The method further includes providing information about the request to a diffusion model (DM) component and receiving, from the DM component, a set of vectors corresponding to the information about the request. The method also includes selecting, using a different component, a set of media items based on the set of vectors, and presenting information about the set of media items to the user.

**EP 4 645 112 A1**

FIG. 4

## Description

RELATED APPLICATIONS

This application claims priority to U.S. Prov. App. No. 63/641,750, filed May 2, 2024, and U.S. App. No. 18/791,022, filed July 31, 2024.

TECHNICAL FIELD

The disclosed embodiments relate generally to media provider systems, including, but not limited to, systems and methods for selecting sets of media items using diffusion model architectures.

BACKGROUND

Access to electronic media, such as music, videos, podcast, and audiobook content, has expanded dramatically over time. As a departure from physical media, media content providers stream media to electronic devices across wireless networks, improving the convenience with which users can digest and experience such content. The overwhelmingly large number of these digital goods often makes navigation of the goods an extremely difficult task. It can be difficult for end users (e.g., consumers) to select the content they want to playback and, as a result, media streaming providers often provide playlists or queues of media content. However, manually generating, evaluating, and revising playlists for different types of content can be time-consuming and challenging.

Diffusion models are known for generating and/or reconstructing image content. Generally speaking, diffusion models perform a "denoising" process in which an initial representation of the final output has little or no similarity or common information with the final output (e.g., the initial representation is pure noise, albeit with the dimensions of the final output). The denoising process proceeds over a plurality of iterations in which the previous iteration (with possible modifications) is passed back through the diffusion model to remove additional noise. The diffusion model may be guided by side inputs, known as conditioning inputs.

SUMMARY

The present disclosure describes, amongst other things, using diffusion models to generate sets (e.g., sequenced sets such as playlists) of audio content (e.g., music, podcasts, and/or other types of media content). As mentioned above, diffusion models are generative models designed to generate high dimensional structured data such as natural images. The present application applies diffusion models to the playlist generation problem. For example, to generate a playlist (e.g., a music playlist) that best represents an input prompt, a DM optionally takes as input all the information that playlist generation is conditioned on such as a text description and, optionally, a list of media items (e.g., tracks), and returns a list of vectors conditioned on the previous information. Such vectors may then be mapped through an additional nearest neighbor search to media item URIs. The resulting playlist can be considered as analogous to a 1D "image" where each pixel corresponds to a media item (e.g., a musical track).

Unlike prior approaches for generating playlists that use LLMs alone (e.g., LLMs that directly access track and/or artist information), diffusion models can be trained to select media items (e.g., to be included in a generated playlist) using latent vectors that represent additional information related to a track and/or artist. For example, a respective track is represented by a latent vector that combines a plurality of features of the respective track, and the representative latent vector is input into the diffusion model. This architecture provides a computationally efficient way of selecting media items to generate a playlist based on a conditioning prompt. Additionally, the diffusion model can further be trained to incorporate other conditions (e.g., text prompts, semantic representations, images, etc.) that are optionally processed using LLMs and/or other models, thereby more efficiently selecting media items that match desired criteria (e.g., by jointly using DMs, LLMs and/or other models). The systems and methods provided herein may convert a given input prompt (e.g., text string) into a request with a format that can be more accurately and more efficiently (e.g., in terms of computational expense) processed by the diffusion model. Furthermore, using DMs enables the playlists to be generated using user information (e.g., user vectors or other information) to personalize the results (e.g., the generated playlist). DMs are also enabled to generate different (e.g., new) results for each iteration of generation, thereby producing a wider variety of playlists by iterating the DM (e.g., each time a new playlist is generated, the playlist is likely to include different but relevant tracks due to the stochasticity of the DM). Advances in fast sampling approaches can be leveraged to speed up computation without requiring retraining of the model, while using a DM that has an efficient loss function to select and/or sort data files based on a prompt that is input by the user, instead of using a computationally-expensive process to directly identify the data files, improves the processing efficiency of this computer-based process.

In accordance with some embodiments a method of playlist generation is provided. The method is performed at a computing device having one or more processors and memory. The method includes: (i) receiving a request to identify a set of media items for playback to a user; (ii) providing information about the request to a diffusion model (DM) component; (iii) receiving, from the DM component, a set of vectors corresponding to the information about the request; (iv) selecting, using a different component, a set of media items based on the set of vectors; and (v) presenting information about the set of media items to the user.

In accordance with some embodiments a method of playlist generation is provided. The method is performed at a computing device having one or more processors and memory. The method includes: (i) providing information about a sequenced set of media items to a DM component; (ii) receiving, from the DM component, a set of vectors generated based on the information about the sequenced set of media items; (iii) identifying a second set of media items using the set of vectors; and (iv) adding the second set of media items to the sequenced set of media items.

In accordance with some embodiments, a computing system (e.g., an electronic device) is provided. The computing system includes one or more processors and memory storing one or more programs. The one or more programs include instructions for performing any of the methods described herein.

In accordance with some embodiments, a non-transitory computer-readable storage medium is provided. The non-transitory computer-readable storage medium stores one or more programs for execution by a computing system with one or more processors. The one or more programs comprising instructions for performing any of the methods described herein.

Thus, devices and systems are disclosed with methods for playlist generation, revision, and/or evaluation. Such methods and systems may complement or replace conventional methods, devices, and systems for playlist generation, revision, and/or evaluation.

BRIEF DESCRIPTION OF THE DRAWINGS

The embodiments disclosed herein are illustrated by way of example, and not by way of limitation, in the figures of the accompanying drawings. Like reference numerals refer to corresponding parts throughout the drawings and specification.

Figure 1 is a block diagram illustrating an example media content delivery system in accordance with some embodiments.

Figure 2 is a block diagram illustrating an example electronic device in accordance with some embodiments.

Figure 3 is a block diagram illustrating an example media content server in accordance with some embodiments.

Figure 4 is a block diagram illustrating an example diffusion model architecture in accordance with some embodiments.

Figure 5A illustrates an example training phase for an example DM-based playlist generation system in accordance with some embodiments.

Figure 5B illustrates an example generation phase for the example DM-based playlist generation system in accordance with some embodiments.

Figures 6A-6B illustrate example user interfaces for playlist generation in accordance with some embodiments.

Figures 7A-7B are flow diagrams illustrating a method of identifying sets of media items using a diffusion model (DM), in accordance with some embodiments.

DETAILED DESCRIPTION

Reference will now be made to embodiments, examples of which are illustrated in the accompanying drawings. In the following description, numerous specific details are set forth in order to provide an understanding of the various described embodiments. However, it will be apparent to one of ordinary skill in the art that the various described embodiments may be practiced without these specific details. In other instances, well-known methods, procedures, components, circuits, and networks have not been described in detail so as not to unnecessarily obscure aspects of the embodiments.

As mentioned above, the disclosed embodiments describe using a diffusion model (DM) component to identify sets of media items, such as sequenced sets of media items, for playback by a user. Similar to images and audio, playlists (and other sets of media items) can be considered an art form consisting of a list of media items (e.g., music tracks). As described herein, a DM can be trained to generate high-quality playlists, e.g., conditioned on a textual prompt. In this way, the DM can learn structures from example playlists and create new ones from user requests.

**Media Content Delivery System**

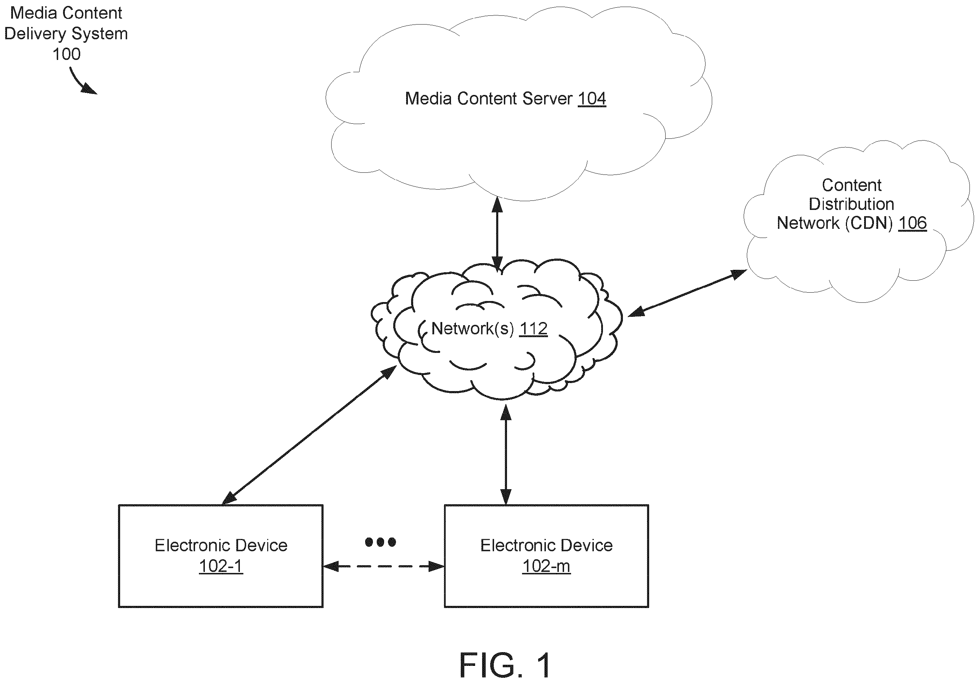

Figure 1 is a block diagram illustrating a media content delivery system 100, in accordance with some embodiments. The media content delivery system 100 includes one or more electronic devices 102 (e.g., electronic device 102-1 to electronic device 102-m, where m is an integer greater than one), one or more media content servers 104, and/or one or more content distribution networks (CDNs) 106. The one or more media content servers 104 are associated with (e.g., at least partially compose) a media-providing service. The one or more CDNs 106 store and/or provide one or more content items (e.g., to electronic devices 102). In some embodiments, the CDNs 106 are included in the media content servers 104. One or more networks 112 communicably couple the components of the media content delivery system 100. In some embodiments, the one or more networks 112 include public communication networks, private communication networks, or a combination of both public and private communication networks. For example, the one or more networks 112 can be any network (or combination of networks) such as the Internet, other wide area networks (WAN), local area networks (LAN), virtual private networks (VPN), metropolitan area networks (MAN), peer-to-peer networks, and/or ad-hoc connections.

In some embodiments, an electronic device 102 is associated with one or more users. In some embodiments, an electronic device 102 is a personal computer, mobile electronic device, wearable computing device, laptop computer, tablet computer, mobile phone, feature phone, smart phone, an infotainment system, digital media player, a speaker, television (TV), and/or any other electronic device capable of presenting media content (e.g., controlling playback of media items, such as music tracks, podcasts, videos, etc.). Electronic devices 102 may connect to each other wirelessly and/or through a wired connection (e.g., directly through an interface, such as an HDMI interface). In some embodiments, electronic devices 102-1 and 102-m are the same type of device (e.g., electronic device 102-1 and electronic device 102-m are both speakers). Alternatively, electronic device 102-1 and electronic device 102-m include two or more different types of devices.

In some embodiments, electronic devices 102-1 and 102-m send and receive media-control information through network(s) 112. For example, electronic devices 102-1 and 102-m send media control requests (e.g., requests to play music, podcasts, movies, videos, or other media items, or playlists thereof) to media content server 104 through network(s) 112. Additionally, electronic devices 102-1 and 102-m, in some embodiments, also send indications of media content items to media content server 104 through network(s) 112. In some embodiments, the media content items are uploaded to electronic devices 102-1 and 102-m before the electronic devices forward the media content items to media content server 104.

In some embodiments, electronic device 102-1 communicates directly with electronic device 102-m (e.g., as illustrated by the dotted-line arrow), or any other electronic device 102. As illustrated in Figure 1, electronic device 102-1 is able to communicate directly (e.g., through a wired connection and/or through a short-range wireless signal, such as those associated with personal-area-network (e.g., BLUETOOTH / BLE) communication technologies, radio-frequency-based near-field communication technologies, infrared communication technologies, etc.) with electronic device 102-m. In some embodiments, electronic device 102-1 communicates with electronic device 102-m through network(s) 112. In some embodiments, electronic device 102-1 uses the direct connection with electronic device 102-m to stream content (e.g., data for media items) for playback on the electronic device 102-m.

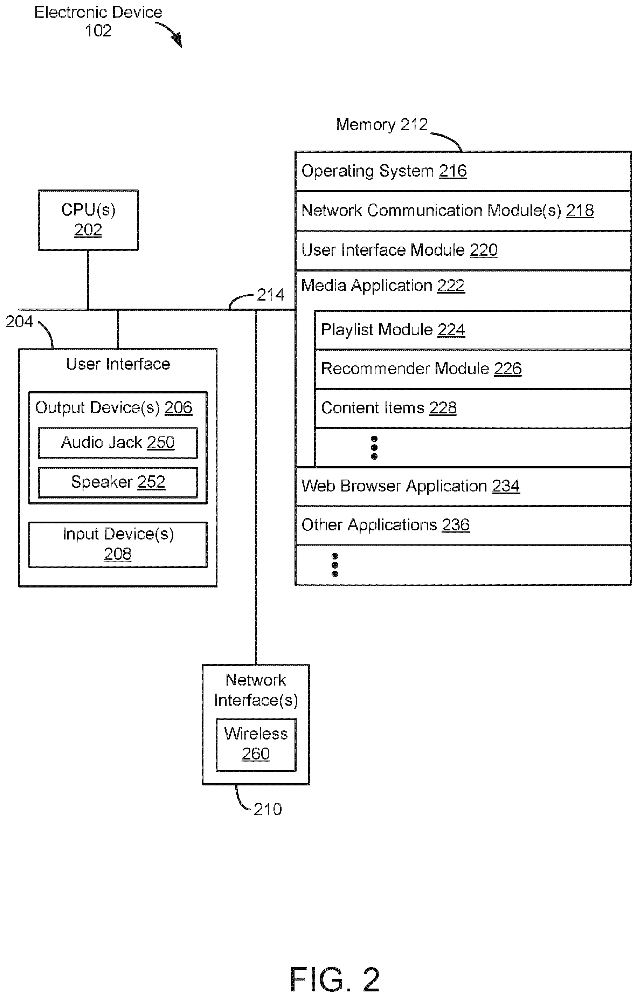

In some embodiments, electronic device 102-1 and/or electronic device 102-m include a media application 222 (Figure 2) that allows a respective user of the respective electronic device to upload (e.g., to media content server 104), browse, request (e.g., for playback at the electronic device 102), and/or present media content (e.g., control playback of music tracks, playlists, videos, etc.). In some embodiments, one or more media content items are stored locally by an electronic device 102 (e.g., in memory 212 of the electronic device 102, Figure 2). In some embodiments, one or more media content items are received by an electronic device 102 in a data stream (e.g., from the CDN 106 and/or from the media content server 104). The electronic device(s) 102 are capable of receiving media content (e.g., from the CDN 106) and presenting the received media content. For example, electronic device 102-1 may be a component of a network-connected audio/video system (e.g., a home entertainment system, a radio/alarm clock with a digital display, or an infotainment system of a vehicle). In some embodiments, the CDN 106 sends media content to the electronic device(s) 102.

In some embodiments, the CDN 106 stores and provides media content (e.g., media content requested by the media application 222 of electronic device 102) to electronic device 102 via the network(s) 112. Content (also referred to herein as "media items," "media content items," and "content items") is received, stored, and/or served by the CDN 106. In some embodiments, content includes audio (e.g., music, spoken word, podcasts, audiobooks, etc.), video (e.g., short-form videos, music videos, television shows, movies, clips, previews, etc.), text (e.g., articles, blog posts, emails, etc.), image data (e.g., image files, photographs, drawings, renderings, etc.), games (e.g., 2- or 3-dimensional graphics-based computer games, etc.), or any combination of content types (e.g., web pages that include any combination of the foregoing types of content or other content not explicitly listed). In some embodiments, content includes one or more audio media items (also referred to herein as "audio items," "tracks," and/or "audio tracks").

In some embodiments, media content server 104 receives media requests (e.g., commands) from electronic devices 102. In some embodiments, media content server 104 includes a voice API, a connect API, and/or key service. In some embodiments, media content server 104 validates (e.g., using key service) electronic devices 102 by exchanging one or more keys (e.g., tokens) with electronic device(s) 102.

In some embodiments, media content server 104 and/or CDN 106 stores one or more playlists (e.g., information indicating a set of media content items). For example, a playlist is a set of media content items defined by a user and/or defined by an editor associated with a media-providing service. The description of the media content server 104 as a "server" is intended as a functional description of the devices, systems, processor cores, and/or other components that provide the functionality attributed to the media content server 104. It will be understood that the media content server 104 may be a single server computer, or may be multiple server computers. Moreover, the media content server 104 may be coupled to CDN 106 and/or other servers and/or server systems, or other devices, such as other client devices, databases, content delivery networks (e.g., peer-to-peer networks), network caches, and the like. In some embodiments, the media content server 104 is implemented by multiple computing devices working together to perform the actions of a server system (e.g., cloud computing).

Figure 2 is a block diagram illustrating an electronic device 102 (e.g., electronic device 102-1 and/or electronic device 102-m, Figure 1) in accordance with some embodiments. The electronic device 102 includes one or more central processing units (CPU(s), i.e., processors or cores) 202, one or more network (or other communications) interfaces 210, memory 212, and one or more communication buses 214 for interconnecting these components. The communication buses 214 optionally include circuitry (sometimes called a chipset) that interconnects and controls communications between system components.

In some embodiments, the electronic device 102 includes a user interface 204, including output device(s) 206 and/or input device(s) 208. In some embodiments, the input devices 208 include a keyboard, mouse, or track pad. Alternatively, or in addition, in some embodiments, the user interface 204 includes a display device that includes a touch-sensitive surface, in which case the display device is a touch-sensitive display. In electronic devices that have a touch-sensitive display, a physical keyboard is optional (e.g., a soft keyboard may be displayed when keyboard entry is needed). In some embodiments, the output devices (e.g., output device(s) 206) include a speaker 252 (e.g., speakerphone device) and/or an audio jack 250 (or other physical output connection port) for connecting to speakers, earphones, headphones, or other external listening devices. Furthermore, some electronic devices 102 use a microphone and voice recognition device to supplement or replace the keyboard. Optionally, the electronic device 102 includes an audio input device (e.g., a microphone) to capture audio (e.g., speech from a user).

In some embodiments, the one or more network interfaces 210 include wireless and/or wired interfaces for receiving data from and/or transmitting data to other electronic devices 102, a media content server 104, a CDN 106, and/or other devices or systems. In some embodiments, data communications are conducted using any of a variety of custom or standard wireless protocols (e.g., NFC, RFID, IEEE 802.15.4, Wi-Fi, Zig-Bee, 6LoWPAN, Thread, Z-Wave, Bluetooth, ISA100.11a, WirelessHART, MiWi, etc.). Furthermore, in some embodiments, data communications are conducted using any of a variety of custom or standard wired protocols (e.g., USB, Firewire, Ethernet, etc.). For example, the one or more network interfaces 210 include a wireless interface 260 for enabling wireless data communications with other electronic devices 102, media presentations systems, and/or or other wireless (e.g., Bluetooth-compatible) devices (e.g., for streaming audio data to the media presentations system of an automobile). Furthermore, in some embodiments, the wireless interface 260 (or a different communications interface of the one or more network interfaces 210) enables data communications with other WLAN-compatible devices (e.g., a media presentations system) and/or the media content server 104 (via the one or more network(s) 112, Figure 1).

In some embodiments, electronic device 102 includes one or more sensors including, but not limited to, accelerometers, gyroscopes, compasses, magnetometer, light sensors, near field communication transceivers, barometers, humidity sensors, temperature sensors, proximity sensors, range finders, and/or other sensors/devices for sensing and measuring various environmental conditions.

Memory 212 includes high-speed random-access memory, such as DRAM, SRAM, DDR RAM, or other random-access solid-state memory devices; and may include non-volatile memory, such as one or more magnetic disk storage devices, optical disk storage devices, flash memory devices, or other non-volatile solid-state storage devices. Memory 212 may optionally include one or more storage devices remotely located from the CPU(s) 202. Memory 212, or alternately, the non-volatile memory solid-state storage devices within memory 212, includes a non-transitory computer-readable storage medium. In some embodiments, memory 212 or the non-transitory computer-readable storage medium of memory 212 stores the following programs, modules, and data structures, or a subset or superset thereof:

- an operating system 216 that includes procedures for handling various basic system services and for performing hardware-dependent tasks;

- network communication module(s) 218 for connecting the client device 102 to other computing devices (e.g., media presentation system(s), media content server 104, and/or other client devices) via the one or more network interface(s) 210 (wired or wireless) connected to one or more network(s) 112;

- a user interface module 220 that receives commands and/or inputs from a user via the user interface 204 (e.g., from the input devices 208) and provides outputs for playback and/or display on the user interface 204 (e.g., the output devices 206);

- a media application 222 (e.g., an application for accessing a media-providing service of a media content provider associated with media content server 104) for uploading, browsing, receiving, processing, presenting, and/or requesting playback of media (e.g., media items). In some embodiments, media application 222 includes a media player, a streaming media application, and/or any other appropriate application or component of an application. In some embodiments, media application 222 is used to monitor, store, and/or transmit (e.g., to media content server 104) data associated with user behavior. In some embodiments, media application 222 also includes the following modules (or sets of instructions), or a subset or superset thereof:

◦ a playlist module 224 for storing sets of media items for playback in a predefined order. In some embodiments, the playlist module 224 is configured to generate playlists. In some embodiments, the playlist module 224 includes a diffusion model component, a large language model component, and/or a nearest neighbor search component;

◦ a recommender module 226 for identifying and/or displaying recommended media items (e.g., to include in a playlist). In some embodiments, the recommender module 226 includes a diffusion model component, a large language model component, and/or a nearest neighbor search component;

◦ a content items module 228 for storing media items, including audio items such as podcasts and songs, for playback and/or for forwarding requests for media content items to the media content server. In some embodiments, the content item module 228 includes a set of vector representations for the media items;

• a web browser application 234 for accessing, viewing, and interacting with web sites; and

• other applications 236, such as applications for word processing, calendaring, mapping, weather, stocks, time keeping, virtual digital assistant, presenting, number crunching (spreadsheets), drawing, instant messaging, e-mail, telephony, video conferencing, photo management, video management, a digital music player, a digital video player, 2D gaming, 3D (e.g., virtual reality) gaming, electronic book reader, and/or workout support.

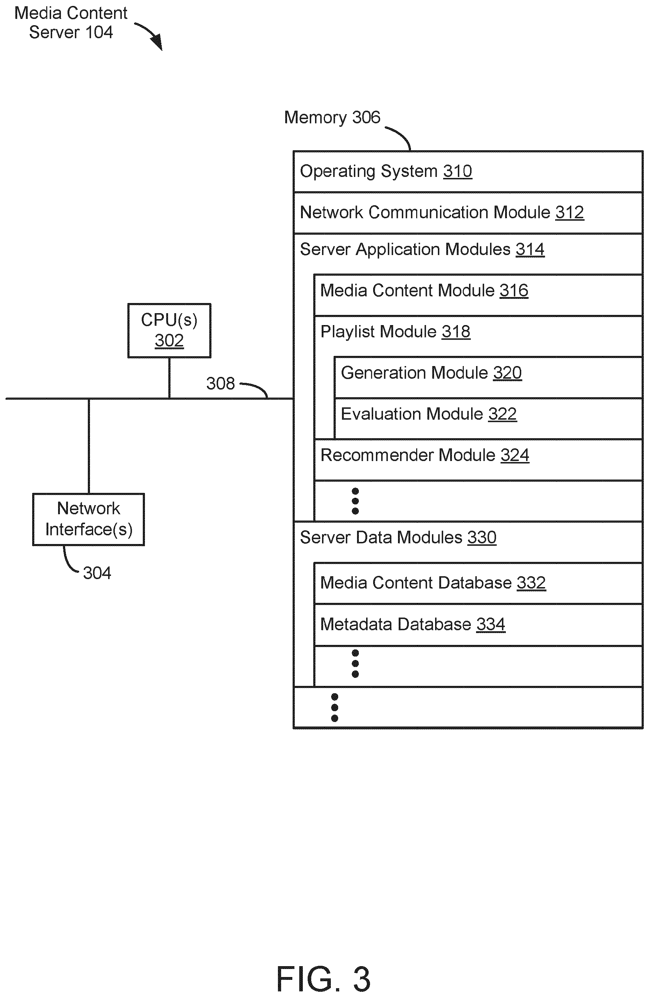

Figure 3 is a block diagram illustrating a media content server 104 in accordance with some embodiments. The media content server 104 typically includes one or more central processing units/cores (CPUs) 302, one or more network interfaces 304, memory 306, and one or more communication buses 308 for interconnecting these components.

Memory 306 includes high-speed random-access memory, such as DRAM, SRAM, DDR RAM, or other random access solid-state memory devices; and may include non-volatile memory, such as one or more magnetic disk storage devices, optical disk storage devices, flash memory devices, or other non-volatile solid-state storage devices. Memory 306 optionally includes one or more storage devices remotely located from one or more CPUs 302. Memory 306, or, alternatively, the non-volatile solid-state memory device(s) within memory 306, includes a non-transitory computer-readable storage medium. In some embodiments, memory 306, or the non-transitory computer-readable storage medium of memory 306, stores the following programs, modules and data structures, or a subset or superset thereof:

• an operating system 310 that includes procedures for handling various basic system services and for performing hardware-dependent tasks;

• a network communication module 312 that is used for connecting the media content server 104 to other computing devices via one or more network interfaces 304 (wired or wireless) connected to one or more networks 112;

• one or more server application modules 314 for performing various functions with respect to providing and managing a content service, the server application modules 314 including, but not limited to, one or more of:

◦ a media content module 316 for storing one or more media content items and/or sending (e.g., streaming), to the electronic device, one or more requested media content item(s);

◦ a playlist module 318 for storing and/or providing (e.g., streaming) sets of media content items (e.g., to the electronic devices 102). In some embodiments, the playlist module 318 includes one or more of: a generation module 320 for generating playlists and media sets and an evaluation module 322 for evaluating the playlists and media sets, e.g., before and after publication. In some embodiments, the playlist module 318 includes a diffusion model component, a large language model component, and/or a nearest neighbor search component;

◦ a recommender module 324 for determining and/or providing media item recommendations (e.g., for a playlist). In some embodiments, the recommender module 324 includes a diffusion model component, a large language model component, and/or a nearest neighbor search component; and

• one or more server data module(s) 330 for managing the storage of and/or access to media items and/or metadata relating to the media items; in some embodiments, the one or more server data module(s) 330 include:

> v a media content database 332 for storing media items and/or vector representations (or other embeddings) for the media items; and

> ∘ a metadata database 334 for storing metadata relating to the media items, such as a genre associated with the respective media items.

In some embodiments, the media content server 104 includes web or Hypertext Transfer Protocol (HTTP) servers, File Transfer Protocol (FTP) servers, as well as web pages and applications implemented using Common Gateway Interface (CGI) script, PHP Hyper-text Preprocessor (PHP), Active Server Pages (ASP), Hyper Text Markup Language (HTML), Extensible Markup Language (XML), Java, JavaScript, Asynchronous JavaScript and XML (AJAX), XHP, Javelin, Wireless Universal Resource File (WURFL), and the like.

Each of the above identified modules stored in memory 212 and 306 corresponds to a set of instructions for performing a function described herein. The above identified modules or programs (i.e., sets of instructions) need not be implemented as separate software programs, procedures, or modules, and thus various subsets of these modules may be combined or otherwise rearranged in various embodiments. In some embodiments, memory 212 and 306 optionally store a subset or superset of the respective modules and data structures identified above. Furthermore, memory 212 and 306 optionally store additional modules and data structures not described above.

Although Figure 3 illustrates the media content server 104 in accordance with some embodiments, Figure 3 is intended more as a functional description of the various features that may be present in one or more media content servers than as a structural schematic of the embodiments described herein. In practice, and as recognized by those of ordinary skill in the art, items shown separately could be combined and some items could be separated. For example, some items shown separately in Figure 3 could be implemented on single servers and single items could be implemented by one or more servers. In some embodiments, media content database 332 and/or metadata database 334 are stored on devices (e.g., CDN 106) that are accessed by media content server 104. The actual number of servers used to implement the media content server 104, and how features are allocated among them, will vary from one implementation to another and, optionally, depends in part on the amount of data traffic that the server system manages during peak usage periods as well as during average usage periods.

**Media Item Identification Approaches**

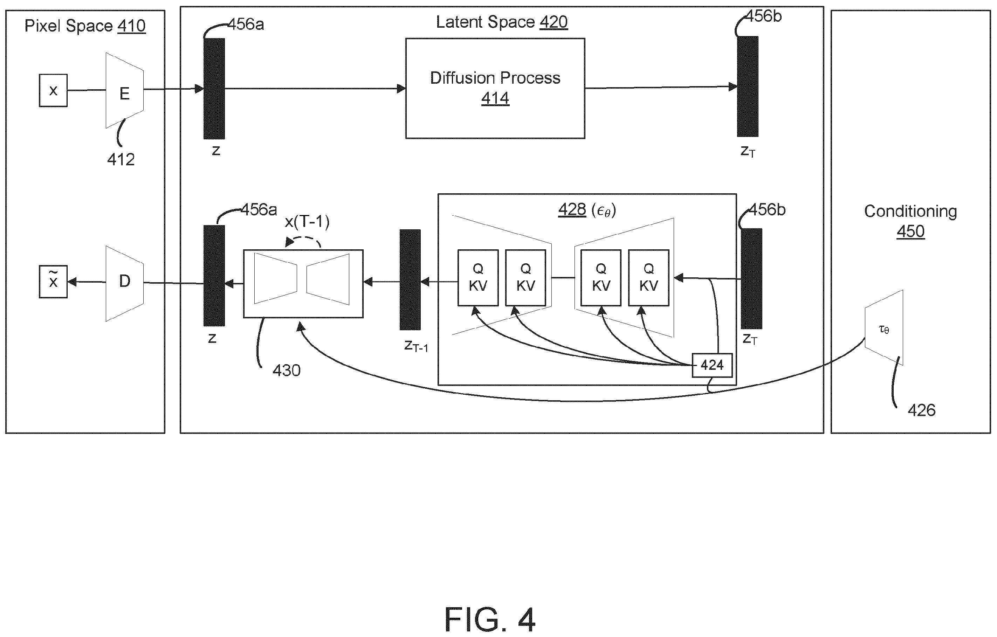

The processes and techniques described below may be performed at the devices and systems described above (e.g., the media content server 104 and/or one or more of the electronic devices 102). A diffusion model (DM) is a probabilistic generative model that works by iteratively denoising pure noise. DMs are conventionally used for generating, e.g., images (e.g., from multiple noise samples a DM may recover different images). DMs may be used with or without conditioning. A DM may use a textual prompt as conditioning (e.g., to drive image generation in accordance with the textual prompt). Figure 4 is a block diagram illustrating an example diffusion model architecture in accordance with some embodiments.

Some embodiments include training a DM that, starting from a conditioning prompt and an example set of media items (e.g., an example playlist), learns how to add and remove noise from the example set of media items. In some embodiments, the DM is a continuous DM that has trained on embeddings for media items (e.g., music tracks) in a continuous space. For example, to generate playlists, vectors generated by the DM are mapped to media item uniform resource indicators (URIs) (e.g., the closest media item URIs).

In some embodiments, the DM architecture includes an encoding module 412 that, from the discrete space (e.g., pixel space 410), is used to map data (e.g., "x") into a continuous latent space 420 of fixed dimensionality (e.g., as latent representation $z$ 456a) to input to a continuous diffusion process 414. For example, an input playlist (e.g., a list of track vectors) is encoded into a lower dimensional latent variable ($z$ 456a). The latent variable (e.g., latent representation $z$ 456a) is fed into the diffusion process 414 that iteratively adds noise until transforming the variable $z$ 456a into pure noise ($z_T$ 456b). The DM also learns a reverse diffusion process (including denoising processes 428 and 430) that starts with the noisy variable $z_T$ 456b and learns to denoise it to reconstruct the latent representation $z$ 456a using the information from the prompt (e.g., from conditioning module 450). As such, the DM is trained to recover the input playlist (e.g., recover $\bar{x}$) starting from a noisy variable, which will be used during inference. In some embodiments, the denoising process 428 is the same as the denoising process 430 that is used to generate a sample from t to t-1, and together comprise the reverse diffusion process. For example, the forward diffusion process 414 adds noise to the latent variable of t-1 to generate a latent variable t. The reverse diffusion process is performed, during training of the DM architecture, to remove the noise that was artificially added in the forward process. In some embodiments, the reverse diffusion process uses a neural network $\varepsilon\theta$ ($xt$, $t$, $c$), where the parameters are learned during training phase. As such, at inference (e.g., during generation), the trained function can denoise a "pure noise" variable.

In some embodiments, the DM architecture includes a conditioning module 450 that maps all the information used to condition the playlist generation (e.g., including one or more of semantic maps, textual prompts, representations and/or images) to a fixed length vector. For example, for textual information, a pre-trained encoder is used for text encoding (e.g., encoding a prompt into an embedding that can be used to condition the input playlist x in the DM).

In some embodiments, the encoding module 412 deals with discrete data, by encoding the input data into a latent low dimensional space through the use of an embedding function $\phi$ that maps each sample (x) to a corresponding vector (z) in $R^d$. The embedding of a discrete sequence $w$ of length $n$ is therefore $\phi(w) = \{\phi(w_1), \ldots, \phi(w_n)\}$, where $\phi(w) \in R^{n \times d\_\phi}$. In some embodiments, a trainable encoding module (trained alongside the diffusion model) is used. In some embodiments, a fixed encoding module (which was trained separately) is used.

In some embodiments, the conditioning module 450 includes a conditional denoising autoencoder 428, $\varepsilon_\theta(x_t, t, c)$, which allows for control of the generation using additional information such as text. In some embodiments, to preprocess the conditional text, a domain agnostic encoder 426 ($\tau_\theta$) is used to embed $y$ to a vector representation $\tau_\theta(y) \in R^{M \times d\_\tau}$, which for ease of notation we refer to as context $c$. The context $c$ is then used to condition the diffusion process, using a cross attention layer 424 ($Q KV$) in the transformer module, as illustrated in Figure 4. In some embodiments, the cross-attention layer 424 incorporates the conditioning into the diffusion model process, such that the context (e.g., conditioning) is driving the aggregation of the features from the attention module, in such a way that different conditions, such as text conditioning, result in different outputs that are specific to the respective conditioning.

In some embodiments, a transformer architecture is used to capture sequential information and enable scalable training, sometimes referred to herein as diffusion transformer. In some embodiments, a cross-attention mechanism is used in the core transformer block, similar to what is used in latent diffusion models to condition the generation using external information (such as class labels, text, etc.). The model is optimized using the v-prediction:

$$v = \alpha_t \epsilon - \sigma_t x,$$

which gives

$$\hat{x} = \alpha_t z_t - \sigma_t \hat{v}_\theta(z_t).$$

A traditional limitation of diffusion models is the need of relying on all diffusion steps $T$. While a large $T$ is beneficial for ease of training and high-quality generation, the reverse diffusion process needs to sequentially iterate through each step $t \in \{1, \ldots, T\}$, usually in the order of thousands. In practice, this means that generating a single sample can take a time in the order of minutes, making DMs unsuitable for low-latency user-facing applications. To avoid this problem, we consider recent advances in fast sampling approaches, namely consistency models and in particular latent consistency models (LCM), that allow for speeding up the computation without requiring the retraining of the model. LCM, in particular, view the guided reverse diffusion process as an augmented probability flow ODE, and work by directly predicting its solution in the latent space, bypassing the iteration through single diffusion steps.

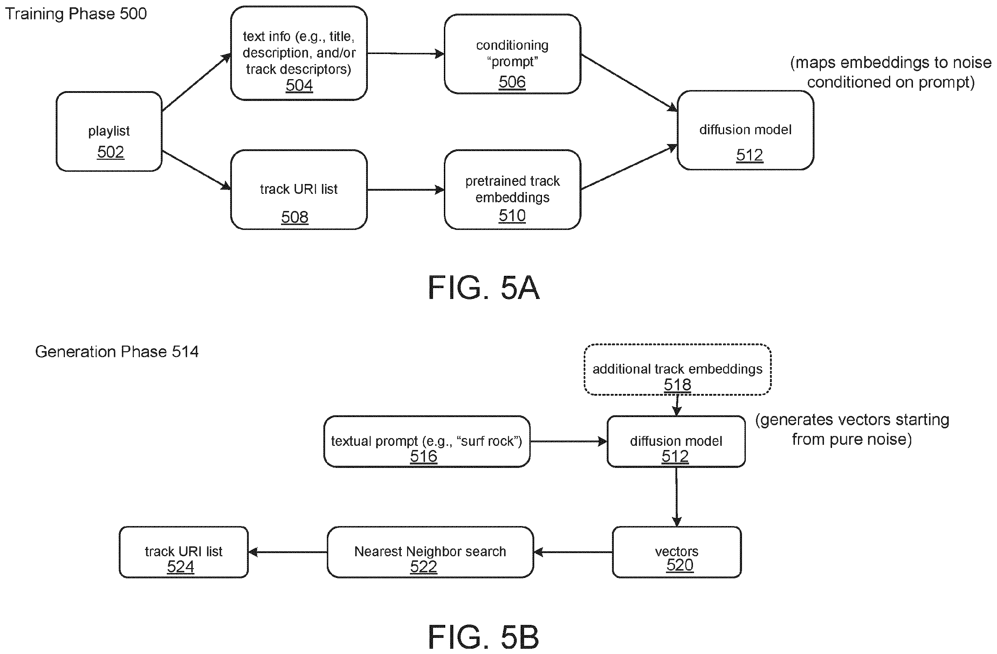

Figure 5A illustrates an example training phase 500 for an example DM-based playlist generation system in accordance with some embodiments. Unlike playlist generation performed by LLMs (e.g., directly using media item and artist information), a DM (e.g., diffusion model 512) may be trained to identify sets of media items (e.g., for a playlist) using media item embeddings (e.g., vector representations such as word2vec vectors). In some embodiments, the embeddings include information such as artist, publisher, date, acoustic features, genre, title, and the like. In some embodiments, the DM is trained using playlist information 502, including text information 504 (e.g., such as playlist name/title, playlist description, and/or media item descriptors for media items within the playlist (e.g., the top 10, 20, or 50 media item descriptors)). In some embodiments, a media item encoder is used to generate URIs for media items in a media item database (e.g., corresponding to a media item catalog). In some embodiments, the DM is configured to map the input to condition the playlist generation to a fixed length vector so that a diffusion process can be defined conditioned on this vector.

In some embodiments, the DM is trained for multiple epochs (e.g., 50 to 1000 epochs) and each epoch takes a different subset of the media items in a training playlist. In some embodiments, the sets of media items identified using the DM are evaluated using one or more techniques (e.g., qualitative evaluation, LLM evaluation, and quantitative media item-level metrics).

In some embodiments, the DM training includes encoding a prompt 506 into an embedding that can be used to condition an input playlist in the DM 512. Then, the input playlist (e.g., list of media item vectors) (e.g., track URI list 508) may be encoded into a lower dimensional latent variable (e.g., using a trained variational autoencoder (VAE)) referred to as pretrained track embeddings 510 to simplify the diffusion process. The pretrained track embeddings 510 may then be fed into the DM 512, which adds a random amount of noise, then it learns to predict the amount of noise added starting from the noisy sample. In this way, the diffusion model 512 is able to learn a reverse diffusion process at the same time: by starting from a noisy variable, the model learns to denoise it using the information from the prompt. This translates into the ability of the diffusion model to recover the original playlist starting from a noisy variable, which is used at inference time. In some embodiments, the variable is decoded (e.g., using a trained VAE decoder).

In accordance with some embodiments, as illustrated in Figure 5B, starting from a conditioning prompt (e.g., textual prompt 516), a generation phase 514 the DM 512 is configured to generate a playlist that incorporates the characteristics specified in the prompt. For example, a DM trained for playlist generation may take a textual prompt, such as "surf rock for a summer road trip," and a random noise sample to generate a corresponding playlist. Figure 5B illustrates an example generation phase (also sometimes called an inference phase) for the example DM-based playlist generation system in accordance with some embodiments. In some embodiments, the textual prompt 516 includes one or more negative limitations (e.g., "do not include rock songs from the 80s"). An advantage of using a DM to generate sets of media items (e.g., a playlist) is that the DM is a stochastic model and therefore results can be fresh/novel (e.g., subsequent requests with a same prompt yield different results) without manually injecting noise into the system. In some embodiments, a playlist is generated based on a search query and/or chatbot conversation. For example, users are able to visit a search page and input a generic query for a playlist, or engage in a discussion with a chatbot (e.g., an AI chatbot) to describe the specific playlist they desire. In this example, the system comprehends either the generic query or the chatbot dialogue, subsequently returning a personalized playlist that aligns with the users' goals and music preferences. For example, the playlist is represented as a list of vectors, and the list of vectors is provided to the DM. In some embodiments, the conditions include a title, description of a playlist, and/or a track descriptor that are encoded into a vector and passed, with the associated track embeddings 510, at each step of the DM. As such, the DM architecture provides a computationally efficient way of selecting media items to generate a playlist based on a conditioning prompt.

For example, for inference, a user-defined prompt (e.g., "summer vibes, surf rock for happy travel") is obtained. As described above, during training the DM learned to denoise a variable using the prompt: at inference time, a pure noise variable is obtained and iteratively denoised by conditioning on the prompt. At the last step of the iterations (and after an optional media item decoding part), a list of vectors 520 may be recovered. However, this list may not directly correspond to a list of media items. To recover a media item URI (e.g., in the track URI list 524) for each of the media items in the playlist, for each of the vectors in the list, a search is performed for the closest media item, e.g., using a nearest neighbor (NN) search 522. In some embodiments, the nearest neighbor search is limited to searching a set of vectors that have been previously consumed by the user (e.g., appear in the playback history of the user), or is limited to a set of vectors that match certain criteria. In some embodiments, the nearest neighbor search excludes one or more tracks (e.g., excludes the one or more vectors corresponding to the one or more tracks).

In some embodiments, a textual prompt includes (or is converted to) a list of media item descriptors. For example, the descriptors may include one or more mood descriptors (e.g., "chill" and "calm"), one or more genre descriptors (e.g., "jazz" and "instrumental"), and/or one or more activity descriptors (e.g., "yoga" and "workout"). In some embodiments, descriptors for a generated set of media items are used to evaluate the quality of the generation.

In some embodiments, personalization is included for training and/or evaluation, e.g., by including other features related to users in the input playlists (e.g., additional track embeddings 518) and/or in the conditioning prompt. In some embodiments, the DM is fine-tuned based on user feedback on the set of media items identified using the DM. In some embodiments, user history information is used as conditioning input for the DM. In some embodiments, a user embedding (e.g., a user vector) is used as conditioning input for the DM. In some embodiments, a textual representation of users' interests (e.g., generated via an LLM) is incorporated into the prompt for the DM. In some embodiments, a transformer is used to encode a user's listening history so as to represent the user's music preference. In some embodiments, the set of media items is sequenced based on user data (e.g., user history and/or user preferences). In some embodiments, the set of media items is filtered and/or ranked to create a sequenced set of media items (which may be presented to the user).

In some embodiments, a language model, such as an LLM, is used with the DM. For example, an LLM is configured to produce an intermediate rephrasing of a prompt, e.g., to increase the generalization of the DM independently of the specific phrasing of a conditioning prompt. In some embodiments, the language model is a component that is configured to incorporate information about the user into the information about the request (e.g., to be input to the DM). In some embodiments, the LLM is configured to reformulate a prompt into terms and/or grammar that is similar to the terms and/or grammar used to train the DM. In some embodiments, the LLM is used to rephrase the conditions (e.g., the title, description, track descriptors and/or other information (e.g., artist name, etc.) to form a label for the playlist to be passed to the DM.

DMs can also be used to replace portion(s) of outputs (e.g., by using tracks (e.g., vector embeddings of tracks) as conditions to inpaint). For example, inpainting is used to restore missing information and/or to reconstruct a media item based on the surrounding context. As such, one or more tracks are used as the context such that the DM "inpaints" the playlist to include additional tracks that are based on the one or more contextual tracks. In some embodiments, the generated playlist includes at least one of the one or more tracks (e.g., including "locked" tracks, described below) that are used as the context and one or more additional tracks. Similarly, some embodiments include iterative refinement of a generated playlist (e.g., to force the inclusion/exclusion of certain media items). For example, a respective track is "locked" to be included in the final playlist. In some embodiments, the DM is conditioned on non-textual input, such as one or more example media items (e.g., such that a new playlist is generated using the DM from an example playlist and/or example (tracks)). In some embodiments, segments that have been previously consumed by the user are used as conditions for the DM to generate an additional segment as context for the recommended playlist (e.g., to insert additional tracks into a playlist).

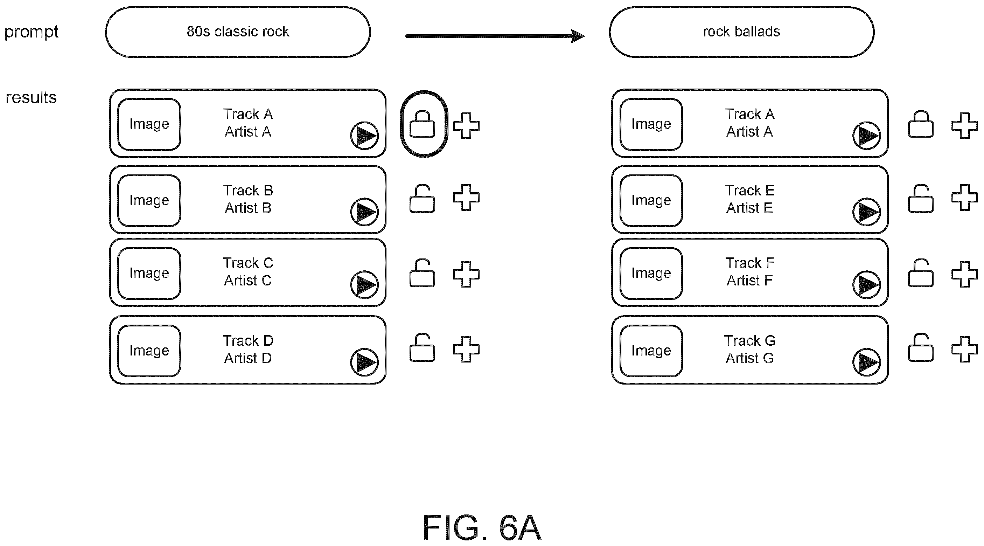

Figures 6A-6B illustrate example user interfaces for playlist generation in accordance with some embodiments. Figure 6A shows an example in which, after prompt generation, a user (e.g., a playlist editor) is able to lock one or more of the identified media items and change the prompt. The locked media items may then be used in both the new results and as a conditioning input for the DM, along with the conditioning text (e.g., "rock ballads" in Figure 6A).

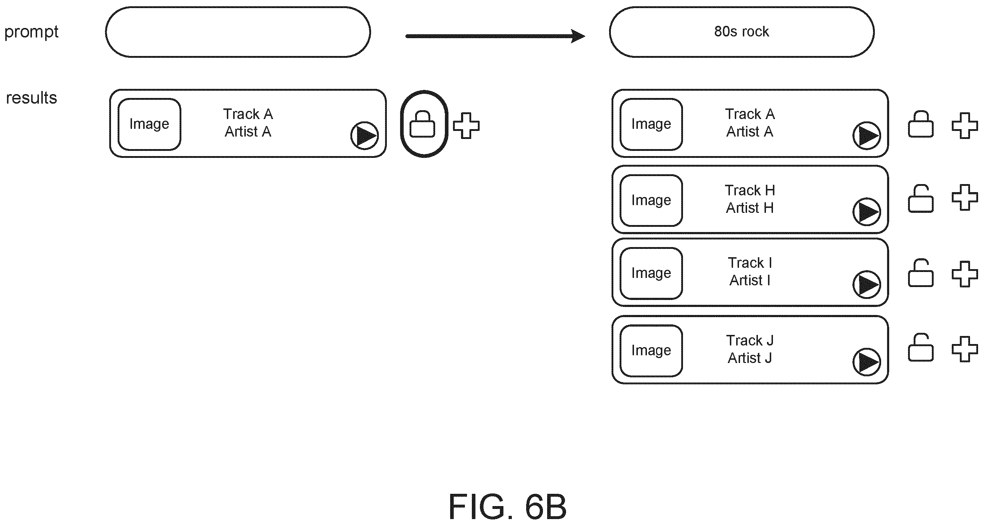

Figure 6B shows an example in which, before generation, a user is able to manually add one or more media items and then use a conditioning prompt (e.g., "80s rock" in Figure 6B) to generate the remainder of the playlist. For example, an editor or other user is able to detail the requirements of a playlist, including the incorporation of certain tracks, and provide a natural language description. In this example, utilizing this information, DM is configured to generate a bespoke playlist for user(s) meeting the stated requirements.

In some embodiments, the DM is configured to identify additional media items for an existing playlist (e.g., based on the playlist title, the playlist description, and/or existing media items in the existing playlist).

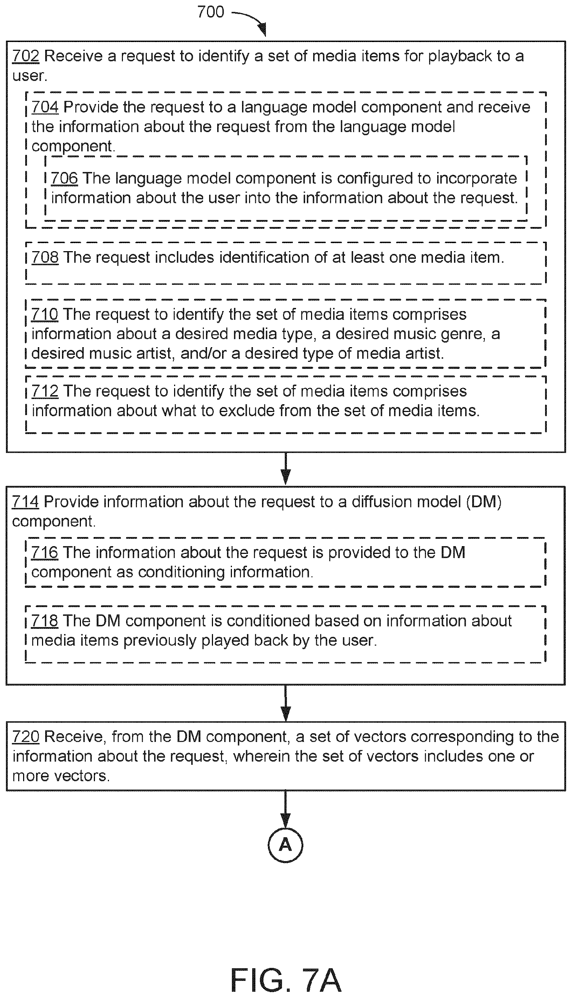

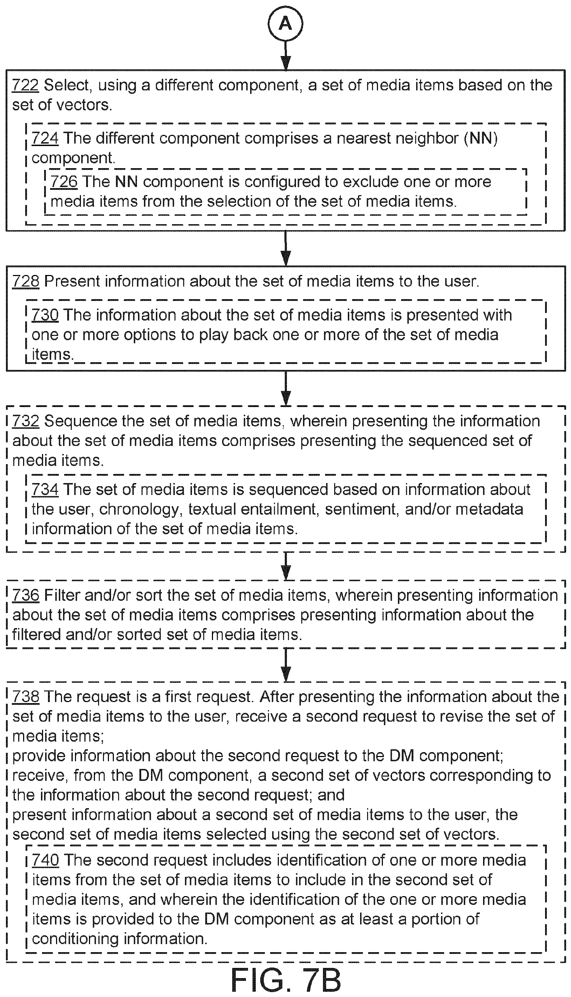

Turning now to some example embodiments, FIGS. 7A-7B are flow diagrams illustrating a method 700 of identifying sets of media items (e.g., playlists) using a diffusion model (DM), in accordance with some embodiments. Operations of the method 700 may be performed at the system 100, which may include one or more electronic devices (e.g., electronic device 102-1, media content server 104). In accordance with some embodiments, operations of the method 700 may be performed at multiple different devices. For example, a user of the media-providing service may provide the textual prompt 516 at a user interface of a mobile application associated with the media-providing service (e.g., a streaming application), and the textual prompt 516 may be provided to the media content server 104 in conjunction with converting and/or inputting the textual prompt 516 to the diffusion model 512, which are discussed in more detail below.

(A1) In one aspect, some embodiments include a method performed at a computing system (e.g., the electronic device 102 and/or the media content server 104) having one or more processors and memory. The method includes: (i) receiving (702) a request to identify a set of media items for playback to a user; (ii) providing (714) information about the request to a diffusion model (DM) component; (iii) receiving (720), from the DM component, a set of vectors (e.g., one or more vectors) corresponding to the information about the request; (iv) selecting (722), using a different component, a set of media items based on the set of vectors; and (v) presenting (728) information about the set of media items to the user. For example, presenting information about the set of media items to the user includes displaying (e.g., in a user interface of a media application) indications of the respective media items in the set of media items. In some embodiments, the computing system automatically, without additional user input, plays back one or more media items of the set of media items at a client device or other presentation device. In some embodiments, the information about the request comprises a hypothetical label for the playlist to be generated.

Using a DM that has an efficient loss function to select and/or sort data files (e.g., media items) based on a prompt (e.g., a textual prompt) that is input by the user, instead of using a computationally-expensive process to directly identify the data files, improves the processing efficiency of this computer-based process.

In some embodiments, the DM component is fine-tuned via reinforcement learning from human feedback (RLHF). In some embodiments, the DM component is trained using vector representations (e.g., word2vec vectors) of media items. For example, a vector space is generated for a catalog of media items and the DM component is trained for the vector space. In some embodiments, the DM component is trained using information about one or more playlists (e.g., editorial playlists and/or user-generated playlists). In some embodiments, the DM component is trained using playlist labels (e.g., concatenations of playlist name, playlist description, and/or media item descriptors for media items within the playlist). For example, each media item descriptor may include information about the artist, the media item title, recording date, and/or the genre. In some embodiments, the DM component is trained to convert a prompt into one or more embeddings (e.g., vector embeddings).

(A2) In some embodiments of A1, the different component comprises (724) a nearest neighbor (NN) component. For example, the NN component may comprise a k-nearest neighbors (KNN) algorithm. In some embodiments, the different component is configured to map each vector of the set of vectors to a respective media item uniform resource identifier (URI).

(A3) In some embodiments of A2, the NN component is configured to (726) exclude one or more media items from the selection. For example, the NN component is configured to exclude one or media items recently played back by the user, one or more media items already in a playlist corresponding to the set of media items, and/or one or more media items the user has previously requested be excluded from results, recommendations, and/or playlists. In this way, the DM component may be used to create an "endless" playlist that does not repeat playback of media items.

(A4) In some embodiments of any of A1-A3, the method further includes: (i) providing (704) the request to a language model (e.g., a large language model (LLM)) component; and (ii) receiving the information about the request from the LLM component. For example, the LLM component may be configured and used to convert a request into a prompt from the DM component. For example, the request to identify the set of media items is received via a user interaction with an AI chatbot, and the AI chatbot generates the prompt for the DM component based on the user interaction. In some embodiments, the LLM component is configured to convert (e.g., reformulate) the request into a grammar style and/or set of terms used to train the DM component. In some embodiments, the LLM component is configured to convert the request into a set of desired descriptors for the set of media items. Thus, the systems and methods provided herein convert a given input prompt (e.g., text string) into a request with a format that can be more accurately and more efficiently (e.g., in terms of computational expense) processed by the DM.

(A5) In some embodiments of A4, the LLM is configured to (706) incorporate information about the user into the information about the request. For example, the information about the user comprises user preference data. In some embodiments, the information about the request includes information about prior activity of the user.

(A6) In some embodiments of any of A1-A5, the information about the request is provided (716) to the DM component as conditioning information. For example, the information about the request is a textual prompt for the DM component.

(A7) In some embodiments of any of A1-A6, the DM component is conditioned (718) based on information about media items previously played back by the user. For example, the DM component is conditioned based on a user history and/or user preferences.

(A8) In some embodiments of any of A1-A7, the request includes (708) identification of at least one media item. For example, a user may select one or more media items as examples for generating the set of media items. In some embodiments, the request to identify the set of media items does not include an explicit textual prompt (e.g., only includes identification of one or more example media items).

(A9) In some embodiments of any of A1-A8, the request is (738) a first request and the method further includes: (i) after presenting the information about the set of media items to the user, receiving a second request to revise the set of media items; (ii) providing information about the second request to the DM component; (iii) receiving, from the DM component, a second set of vectors corresponding to the information about the second request; and (iv) presenting information about a second set of media items to the user, the second set of media items selected using the second set of vectors. In some embodiments, the second set of vectors correspond to the information about the first request and the information about the second request. In some embodiments, the second set of media items is selected using the different component.

(A10) In some embodiments of A9, the second request includes (740) identification of one or more media items from the set of media items to include in the second set of media items, and the identification of the one or more media items is provided to the DM component as conditioning information. For example, the user may select a user interface element corresponding to the one or more media items (e.g., a lock symbol displayed next to a representation of a media item). In some embodiments, the identification of the one or more media items is only a portion of conditioning information provided to the DM component. For example, additional conditioning information (such as other information from the second request, information about the user, and/or information from prior requests) may also be provided to the DM component.

(A11) In some embodiments of any of A1-A10, the information about the set of media items is presented (730) with one or more options to play back one or more of the set of media items. For example, a set of media item representations is displayed, each with respective play buttons. As another example, the information about the set of media items may be presented with an option to initiate sequential playback of multiple media items (e.g., played back as a playlist of media items).

(A12) In some embodiments of any of A1-A11, the request to identify the set of media items comprises (710) information about a desired media type, a desired music genre, a desired music artist, and/or a desired type of media artist. In some embodiments, the information is textual information (e.g., a natural language description). In some embodiments, the information is encoded information (e.g., obtained based on (analysis off) one or more example media items). In some embodiments, the encoded information is generated based on analysis of a natural language portion of the request (e.g., and concatenated to the natural language portion).

(A13) In some embodiments of any of A1-A12, the request to identify the set of media items comprises (712) information about what to exclude from (e.g., what not to include in) the set of media items. For example, the request includes one or more negative prompts (e.g., based on a user's preferences and/or dislikes).

(A14) In some embodiments of any of A1-A13, the method further includes sequencing (732) the set of media items, where presenting the information about the set of media items comprises presenting the sequenced set of media items.

(A15) In some embodiments of A14, the set of media items is sequenced (734) based on information about the user, chronology, textual entailment, sentiment, and/or metadata information of the set of media items.

(A16) In some embodiments of any of A1-A15, the method further includes filtering and/or sorting (736) the set of media items, wherein presenting information about the set of media items comprises presenting information about the filtered and/or sorted set of media items.

(B 1) In another aspect, some embodiments include a method performed at a computing system (e.g., the electronic device 102 and/or the media content server 104) having one or more processors and memory. The method includes: (i) providing information about a first (e.g., sequenced) set of media items to a DM component; (ii) receiving, from the DM component, a set of vectors generated based on the information about the first set of media items; (iii) identifying a second set of media items using the set of vectors; and (iv) adding the second set of media items to the first set of media items. In some embodiments, the computing system provides (e.g., by displaying indications of the first set of media items and the second set of media items and/or by playing back (e.g., streaming) at least one media item in the second set of media items). For example, the first set of media items corresponds to a pre-existing playlist, and the second set of media items are appended to the pre-existing playlist.

In another aspect, some embodiments include a computing system (e.g., the media content server 104 and/or the electronic device 102-1) including one or more processors and memory coupled to the one or more processors, the memory storing one or more programs configured to be executed by the one or more processors, the one or more programs including instructions for performing any of the methods described herein (e.g., A1-A16 and B1 above).

In yet another aspect, some embodiments include a non-transitory computer-readable storage medium storing one or more programs for execution by one or more processors of a computing system (e.g., the media content server 104 and/or the electronic device 102-1), the one or more programs including instructions for performing any of the methods described herein (e.g., A1-A16 and B1 above).

Although FIGS. 7A-7B illustrate a number of logical stages in a particular order, stages which are not order dependent may be reordered and other stages may be combined or broken out. Some reordering or other groupings not specifically mentioned will be apparent to those of ordinary skill in the art, so the ordering and groupings presented herein are not exhaustive. Moreover, it should be recognized that the stages could be implemented in hardware, firmware, software, or any combination thereof.

It will also be understood that, although the terms first, second, etc. are, in some instances, used herein to describe various elements, these elements should not be limited by these terms. These terms are used only to distinguish one element from another. For example, a first electronic device could be termed a second electronic device, and, similarly, a second electronic device could be termed a first electronic device, without departing from the scope of the various described embodiments. The first electronic device and the second electronic device are both electronic devices, but they are not the same electronic device.

The terminology used in the description of the various embodiments described herein is for the purpose of describing particular embodiments only and is not intended to be limiting. As used in the description of the various described embodiments and the appended claims, the singular forms "a," "an," and "the" are intended to include the plural forms as well, unless the context clearly indicates otherwise. It will also be understood that the term "and/or" as used herein refers to and encompasses any and all possible combinations of one or more of the associated listed items. It will be further understood that the terms "includes," "including," "comprises," and/or "comprising," when used in this specification, specify the presence of stated features, integers, steps, operations, elements, and/or components, but do not preclude the presence or addition of one or more other features, integers, steps, operations, elements, components, and/or groups thereof.

As used herein, the term "if" is, optionally, construed to mean "when" or "upon" or "in response to determining" or "in response to detecting" or "in accordance with a determination that," depending on the context. Similarly, the phrase "if it is determined" or "if [a stated condition or event] is detected" is, optionally, construed to mean "upon determining" or "in response to determining" or "upon detecting [the stated condition or event]" or "in response to detecting [the stated condition or event]" or "in accordance with a determination that [a stated condition or event] is detected," depending on the context.

The foregoing description, for purpose of explanation, has been described with reference to specific embodiments. However, the illustrative discussions above are not intended to be exhaustive or to limit the embodiments to the precise forms disclosed. Many modifications and variations are possible in view of the above teachings. The embodiments were chosen and described in order to best explain the principles and their practical applications, to thereby enable others skilled in the art to best utilize the embodiments and various embodiments with various modifications as are suited to the particular use contemplated.

**Claims**

1. A method performed at a computing system having one or more processors and memory, the method comprising:

   receiving a request to identify a set of media items for playback to a user;
providing information about the request to a diffusion model (DM) component;
receiving, from the DM component, a set of vectors corresponding to the information about the request, wherein the set of vectors includes one or more vectors;
selecting, using a different component, a set of media items based on the set of vectors; and
presenting information about the set of media items to the user.

2. The method of claim 1, wherein the different component comprises a nearest neighbor (NN) component, preferably wherein the NN component is configured to exclude one or more media items from the selection of the set of media items.

3. The method of claim 1-2, further comprising:

providing the request to a language model component; and
receiving the information about the request from the language model component,
preferably wherein the language model component is configured to incorporate information about the user into the information about the request.

4. The method of claim 1-3, wherein the information about the request is provided to the DM component as conditioning information.

5. The method of claim 1-4, wherein the DM component is conditioned based on information about media items previously played back by the user.

6. The method of claim 1-5, wherein the request includes identification of at least one media item.

7. The method of claim 1-6, wherein the request is a first request and the set of media items a is a first set of media items, and the method further comprises:

after presenting the information about the set of media items to the user, receiving a second request to revise the set of media items;
providing information about the second request to the DM component;
receiving, from the DM component, a second set of vectors corresponding to the information about the second request; and
presenting information about a second set of media items to the user, the second set of media items selected using the second set of vectors.

8. The method of claim 7, wherein the second request includes identification of one or more media items from the set of media items to include in the second set of media items, and wherein the identification of the one or more media items is provided to the DM component as at least a portion of conditioning information.

9. The method of claim 1-8, wherein the information about the set of media items is presented with one or more options to play back one or more of the set of media items.

10. The method of claim 1-9, wherein the request to identify the set of media items comprises information about a desired media type, a desired music genre, a desired music artist, and/or a desired type of media artist.

11. The method of claim 1-10, wherein the request to identify the set of media items comprises information about what to exclude from the set of media items.

12. The method of claim 1-11, further comprising sequencing the set of media items, wherein presenting the information about the set of media items comprises presenting the sequenced set of media items, preferably wherein the set of media items is sequenced based on information about the user, chronology, textual entailment, sentiment, and/or metadata information of the set of media items.

13. The method of claim 1-12, further comprising filtering and/or sorting the set of media items, wherein presenting information about the set of media items comprises presenting information about the filtered and/or sorted set of media items.

14. A computing system, comprising:

one or more processors;
memory; and
one or more programs stored in the memory and configured for execution by the one or more processors, the one or more programs comprising instructions for:

receiving a request to identify a set of media items for playback to a user;
providing information about the request to a diffusion model (DM) component;
receiving, from the DM component, a set of vectors corresponding to the information about the request, wherein the set of vectors includes one or more vectors;
selecting, using a different component, a set of media items based on the set of vectors; and
presenting information about the set of media items to the user.

**15.** A non-transitory computer-readable storage medium storing one or more programs configured for execution by a computing system having one or more processors and memory, the one or more programs comprising instructions for:

receiving a request to identify a set of media items for playback to a user;
providing information about the request to a diffusion model (DM) component;
receiving, from the DM component, a set of vectors corresponding to the information about the request, wherein the set of vectors includes one or more vectors;
selecting, using a different component, a set of media items based on the set of vectors; and
presenting information about the set of media items to the user.

Media Content Delivery System 100

Media Content Server 104

Content Distribution Network (CDN) 106

Network(s) 112

Electronic Device 102-1

● ● ●

Electronic Device 102-m

FIG. 1

EP 4 645 112 A1

Electronic Device
102

Memory 212

| Operating System 216 |
| Network Communication Module(s) 218 |
| User Interface Module 220 |
| Media Application 222 |

CPU(s)
202

214

204

User Interface

Output Device(s) 206

Audio Jack 250

Speaker 252

Input Device(s)
208

| Playlist Module 224 |
| Recommender Module 226 |
| Content Items 228 |
| ⋮ |

| Web Browser Application 234 |
| Other Applications 236 |
| ⋮ |

Network
Interface(s)

Wireless
260

210

FIG. 2

Media Content
Server 104

Memory 306

| Operating System 310 |
| Network Communication Module 312 |
| Server Application Modules 314 |

CPU(s)
302

308

Network
Interface(s)

304

Media Content Module 316

Playlist Module 318

Generation Module 320

Evaluation Module 322

Recommender Module 324

⋮

Server Data Modules 330

Media Content Database 332

Metadata Database 334

⋮

⋮

# FIG. 3

FIG. 4

Training Phase 500

text info (e.g., title,
description, and/or
track descriptors)
504

conditioning
"prompt"
506

playlist
502

track URI list
508

pretrained track
embeddings
510

diffusion model
512

(maps embeddings to noise
conditioned on prompt)

## FIG. 5A

Generation Phase 514

additional track embeddings
518

textual prompt (e.g., "surf rock")
516

diffusion model
512

(generates vectors starting
from pure noise)

track URI list
524

Nearest Neighbor search
522

vectors
520

## FIG. 5B

EP 4 645 112 A1

prompt | 80s classic rock → rock ballads

results

| Image | Track A Artist A ▶ | 🔒 ➕ | | Image | Track A Artist A ▶ | 🔓 ➕ |

| Image | Track B Artist B ▶ | 🔓 ➕ | | Image | Track E Artist E ▶ | 🔓 ➕ |

| Image | Track C Artist C ▶ | 🔓 ➕ | | Image | Track F Artist F ▶ | 🔓 ➕ |

| Image | Track D Artist D ▶ | 🔓 ➕ | | Image | Track G Artist G ▶ | 🔓 ➕ |

FIG. 6A

EP 4 645 112 A1

prompt

results

Image | Track A
Artist A

80s rock

Image | Track A
Artist A

Image | Track H
Artist H

Image | Track I
Artist I

Image | Track J
Artist J

FIG. 6B

700 ⟍

**702** Receive a request to identify a set of media items for playback to a user.

> **704** Provide the request to a language model component and receive the information about the request from the language model component.
>
> > **706** The language model component is configured to incorporate information about the user into the information about the request.

> **708** The request includes identification of at least one media item.

> **710** The request to identify the set of media items comprises information about a desired media type, a desired music genre, a desired music artist, and/or a desired type of media artist.

> **712** The request to identify the set of media items comprises information about what to exclude from the set of media items.

**714** Provide information about the request to a diffusion model (DM) component.

> **716** The information about the request is provided to the DM component as conditioning information.

> **718** The DM component is conditioned based on information about media items previously played back by the user.

**720** Receive, from the DM component, a set of vectors corresponding to the information about the request, wherein the set of vectors includes one or more vectors.

(A)

# FIG. 7A

(A)

**722** Select, using a different component, a set of media items based on the set of vectors.

> **724** The different component comprises a nearest neighbor (NN) component.
>> **726** The NN component is configured to exclude one or more media items from the selection of the set of media items.

**728** Present information about the set of media items to the user.

> **730** The information about the set of media items is presented with one or more options to play back one or more of the set of media items.

**732** Sequence the set of media items, wherein presenting the information about the set of media items comprises presenting the sequenced set of media items.

> **734** The set of media items is sequenced based on information about the user, chronology, textual entailment, sentiment, and/or metadata information of the set of media items.

**736** Filter and/or sort the set of media items, wherein presenting information about the set of media items comprises presenting information about the filtered and/or sorted set of media items.

**738** The request is a first request. After presenting the information about the set of media items to the user, receive a second request to revise the set of media items;
provide information about the second request to the DM component;
receive, from the DM component, a second set of vectors corresponding to the information about the second request; and
present information about a second set of media items to the user, the second set of media items selected using the second set of vectors.

> **740** The second request includes identification of one or more media items from the set of media items to include in the second set of media items, and wherein the identification of the one or more media items is provided to the DM component as at least a portion of conditioning information.

## FIG. 7B

# EP 4 645 112 A1

Europäisches
Patentamt
European
Patent Office
Office européen
des brevets

## EUROPEAN SEARCH REPORT

Application Number

EP 25 17 2303

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2016/299906 A1 (CARTOON DANIEL [US] ET AL) 13 October 2016 (2016-10-13) * paragraphs [0005], [0044], [0093] * ----- | 1-15 | INV. G06F16/438 |
|  |  |  | TECHNICAL FIELDS SEARCHED (IPC) |
|  |  |  | G06F |

The present search report has been drawn up for all claims

| Place of search | Date of completion of the search | Examiner |
|---|---|---|
| The Hague | 18 June 2025 | Rameseder, Jonathan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 17 2303

This annex lists the patent family members relating to the patent documents cited in the above-mentioned European search report.
The members are as contained in the European Patent Office EDP file on
The European Patent Office is in no way liable for these particulars which are merely given for the purpose of information.

18-06-2025

| Patent document cited in search report | Publication date | Patent family member(s) | Publication date |
|---|---|---|---|
| US 2016299906 A1 | 13-10-2016 | NONE | |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63641750 B
- US 18791022 B

**Non-patent literature cited in the description**

- database, 332
- database, 334